## Europäisches Patentamt
## European Patent Office
## Office européen des brevets

(19)

(11) Veröffentlichungsnummer : **0 076 230**
**B1**

(12) **EUROPÄISCHE PATENTSCHRIFT**

(45) Veröffentlichungstag der Patentschrift :
28.08.85

(51) Int. Cl.⁴ : **G 05 B 7/02, G 05 B 15/02**

(21) Anmeldenummer : 82730125.0

(22) Anmeldetag : 23.09.82

(54) Elektrische Regleranordnung.

(30) Priorität : 30.09.81 DE 3139512

(43) Veröffentlichungstag der Anmeldung :
06.04.83 Patentblatt 83/14

(45) Bekanntmachung des Hinweises auf die Patenterteilung : 28.08.85 Patentblatt 85/35

(84) Benannte Vertragsstaaten :
AT BE CH DE FR GB IT LI NL

(56) Entgegenhaltungen :
DE-B- 1 802 013
DE-B- 1 806 728
FR-A- 1 364 014
US-A- 3 068 387
US-A- 3 534 335
US-A- 3 940 593

(73) Patentinhaber : Siemens Aktiengesellschaft
Berlin und München Wittelsbacherplatz 2
D-8000 München 2 (DE)

(72) Erfinder : Lesche, Wolfgang, Dipl.-Ing.
Wildbergweg 13
D-1000 Berlin 37 (DE)

EP 0 076 230 B1

**Beschreibung**

Die Erfindung bezieht sich auf eine elektrische Regleranordnung mit einem P-Reglerbaustein, dessen Arbeitspunktwert einstellbar ist und an dessen Ausgang eine Stellgröße ansteht, einer Handsteuereinrichtung, an deren Ausgang eine manuell einstellbare weitere Stellgröße ansteht und mit einem Umschalter, mit dem wahlweise die eine Stellgröße (Automatikbetrieb) oder die weitere Stellgröße (Handbetrieb) auf ein Stellglied durchschaltbar ist.

Bei einer bekannten Regleranordnung dieser Art (Siemens Katalog MP 31 « Elektrische Regler TELEPERM und SOLOPERM für die Prozeßtechnik », 1979, Seiten 3/11, 3/12) wird vor einer Umschaltung von Hand- auf Automatikbetrieb der Arbeitspunktwert des P-Reglerbausteins manuell so eingestellt, daß die eine Stellgröße und die weitere Stellgröße einen übereinstimmenden Wert aufweisen. Durch das manuelle Angleichen der Werte der beiden Stellgrößen ist vermieden, daß während des Umschaltens von Hand- auf Automatikbetrieb eine stoßartige Änderung des jeweiligen Stellgrößenwertes am Eingang des Stellgliedes eintritt. Die Gefahr einer solchen stoßartigen Änderung des Stellgrößenwertes ist besonders durch die Verwendung eines P-Reglerbausteins in der Regleranordnung gegeben, da dieser Reglerbaustein einen von der weiteren Stellgröße (Handbetrieb) unabhängigen Wert an seinem Ausgang aufweist und somit die am Stellglied anliegende Stellgröße bei Beginn des Automatikbetriebes — nach Betätigen des Umschalters — sprungartig aus ihrer Ausgangsstellung auf den am Ausgang des P-Reglerbausteins liegenden Wert springt. Dadurch, daß schon während des Handbetriebes eine Arbeitspunkteinstellung am P-Regler vorgenommen wird, die den P-Reglerbaustein in einen Zustand versetzt, der zu einer Übereinstimmung der Stellgrößen führt, ist zwar ein solcher Sprung am Eingang des Stellgliedes verhindert, jedoch ist bei der bekannten elektrischen Regleranordnung ein manueller Eingriff von Fachpersonal notwendig, das die Angleichung der Stellgrößenwerte vornimmt.

Der Erfindung liegt die Aufgabe zugrunde eine elektrische Regleranordnung zu schaffen, bei der stoßartige Sprünge der Stellgröße am Eingang des Stellgliedes ohne manuelle Eingriffe vermieden sind.

Zur Lösung dieser Aufgabe ist bei einer elektrischen Regleranordnung der eingangs angegebenen Art ein Arbeitspunktwertgeber vorhanden, an dessen einem Eingang die weitere Stellgröße und an dessen weiterem Eingang die Regeldifferenz aus Sollwert und Istwert der Regleranordnung in verstärkter Form anliegt und der in dem Betriebszustand, in dem die weitere Stellgröße am Stellglied anliegt (Handbetrieb) und für den Fall, daß die verstärkte Regeldifferenz durch Einstellung der Stellgröße gleich Null ist, einem dem jeweiligen Wert der weiteren Stellgröße zugeordneten Arbeitspunktwert ermittelt, daß an den Arbeitspunktwertgeber ein Speicher angeschlossen ist, in dem dieser Arbeitspunktwert gespeichert ist, und daß der Ausgang des Speichers mit einem Arbeitspunkteingang des P-Reglerbausteins verbunden ist.

Mit der erfindungsgemäßen elektrischen Regleranordnung ist in vorteilhafter Weise eine selbsttätige Angleichung des Arbeitspunktwertes des P-Reglerbausteins während des Handbetriebes an die Bedingungen während des Automatikbetriebes gewährleistet, indem der Arbeitspunktwertgeber während des Handbetriebes den optimalen Arbeitspunktwert ermittelt und ihn im Speicher ablegt. Beim Betätigen des Umschalters zur Umschaltung der Regleranordnung von Hand- auf Automatikbetrieb wird der P-Reglerbaustein mit diesem gespeicherten Arbeitspunktwert beaufschlagt, so daß der P-Reglerbaustein an seinem Ausgang schon zu Beginn des Automatikbetriebes den gleichen Wert der Stellgröße aufweist, der während des Handbetriebes am Stellglied vorgelegen hat. Stoßartige Sprünge am Eingang des Stellgliedes sind damit auf einfache Weise vermieden.

Um die Ermittlung und Speicherung des Arbeitspunktwertes mit einfachen Mitteln durchführen zu können, sind die Handsteuereinrichtung und der Arbeitspunktwertgeber Digitalbausteine, ist der Speicher ein Digitalspeicher, und der P-Reglerbaustein und das Stellglied sind so ausgebildet, daß sie zur Verarbeitung digitaler Signale geeignet sind.

Da häufig vor allem die Regelverstärker und die Sensorelemente einer elektrischen Regleranordnung als Digitalbausteine ausgeführt sind, um eine schnelle und sichere Regelung zu gewährleisten, ist es vorteilhaft, auch die Stellgrößen und den Arbeitspunktwert durch Digitalsignale zu bilden. Durch die normierte Form dieser Digitalsignale ist die erfindungsgemäße elektrische Regleranordnung auf einfache Weise an unterschiedliche Einsatzbedingungen anpaßbar.

Wird die elektrische Regleranordnung in erster Linie durch einen Mikrokomputer realisiert, dann ist es vorteilhaft, wenn die Handsteuereinrichtung, der Arbeitspunktwertgeber und der Speicher ebenfalls Bestandteile eines Mikrokomputers sind. Bei diesem Ausführungsbeispiel der erfindungsgemäßen elektrischen Regleranordnung kann z. B. die Funktion des Arbeitspunktwertgebers und des Speichers durch Festlegung von Programmschritten im Mikrokomputer vorgenommen werden.

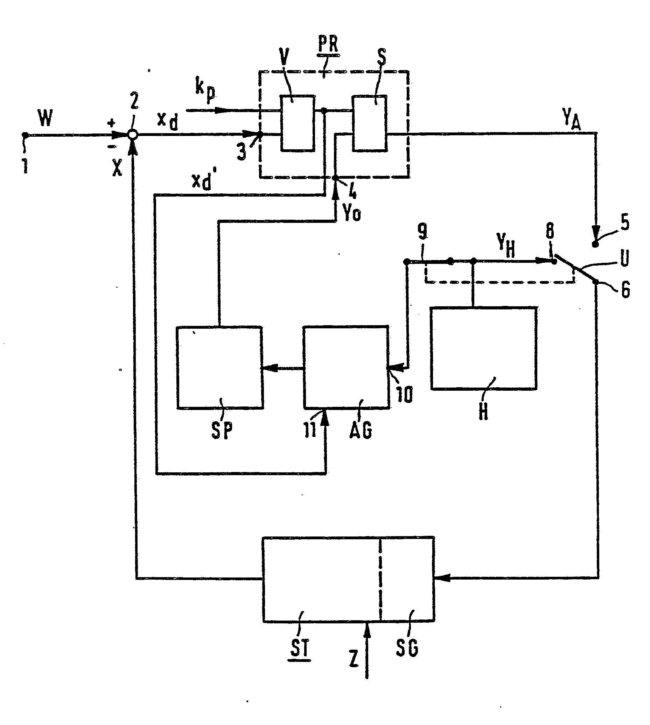

Die Erfindung wird anhand der Figur dargestellt, die ein Blockschaltbild eines Ausführungsbeispiels der elektrischen Regleranordnung zeigt.

Bei dem dargestellten Ausführungsbeispiel liegt an einem Sollgrößeneingang 1 der Regleranordnung der Sollwert W an. An einem Summationspunkt 2 wird die Regeldifferenz $x_d = W - X$ gebildet, wobei die Größe X den Istwert am Ausgang einer Regelstrecke ST darstellt. Die Regeldifferenz $x_d$ liegt am Eingang 3 eines Reglerbausteins PR an, der einen Regelverstärker V und ein Summationsglied S zur Einstellung des Arbeitspunktes des Reglerbausteins PR enthält. Der Regelverstärker V ist an jeweils einem Eingang mit der Regeldifferenz $x_d$ und mit einem Proportionalitätsbeiwert $k_p$ beaufschlagt und gibt an seinem Ausgang die verstärkte Regeldifferenz $x_d' = k_p \cdot x_d$ ab. Das Summationsglied S ist an jeweils einem Eingang mit der verstärkten Regeldifferenz $x_d'$ und mit dem Arbeitspunktwert $y_o$ über einen Arbeitspunkteingang 4 beaufschlagt. Der Ausgang des Summationsgliedes S bildet den Ausgang des P-Reglerbausteins PR, an dem die Stellgröße $Y_A$ ansteht und ist mit einem Kontakt 5 eines Umschalters U verbunden. Der Arbeitskontakt 6 des Umschalters U ist auf den Eingang eines Stellgliedes SG geführt, das Bestandteil der Strecke ST ist. Die Strecke ST ist außerdem mit einer Störgröße Z beaufschlagt.

Über einen weiteren Kontakt 8 des Umschalters U ist eine weitere Stellgröße $Y_H$ als Ausgangssignal einer Handsteuereinrichtung H mit dem Eingang des Stellgliedes SG verbindbar. Der Ausgang der Handsteuereinrichtung H ist außerdem über einen Schalter 9 auf einen Eingang 10 eines Arbeitspunktwertgebers AG geführt; mit einem weiteren Eingang 11 des Arbeitspunktwertgebers AG ist der Ausgang des Regelverstärkers V verbunden. Der Ausgang des Arbeitspunktwertgebers AG ist an den Eingang eines Speichers SP angeschlossen und der Ausgang des Speichers SP ist mit dem Arbeitspunkteingang 4 des Reglerbausteins PR verbunden und weist hier den Arbeitspunktwert $Y_o$ auf.

Die Funktion der erfindungsgemäßen elektrischen Regleranordnung wird anhand der Figur wie folgt erläutert. In dem Betriebszustand, in dem über den Umschalter U die weitere Stellgröße $Y_H$ auf das Stellglied SG geführt ist (Handbetrieb) wird die weitere Stellgröße $Y_H$ über den in diesem Betriebszustand geschlossenen Schalter 9 auf den Eingang 10 des Arbeitspunktwertgebers AG geführt. Der Arbeitspunktwertgeber AG ist so ausgebildet, daß er für den Fall in dem an seinem weiteren Eingang 11 die verstärkte Regeldifferenz $x_d'$ gleich Null ist, an seinem Ausgang einen Arbeitspunktwert $Y_o$ ermittelt, der dem jeweiligen Wert der weiteren Stellgröße $Y_H$ zugeordnet ist — evtl. sogar den gleichen Wert aufweist —. Dieser Arbeitspunktwert $Y_o$ wird im Speicher SP gespeichert und steht sodann auch während der Umschaltung von Hand- auf Automatikbetrieb und während des daran anschließenden Automatikbetriebes am Arbeitspunkteingang 4 des P-Reglerbausteins PR zur Verfügung.

Stoßartige Sprünge am Eingang des Stellgliedes SG sind somit aufgrund der optimalen Arbeitspunkteinstellung des P-Reglerbausteins PR auch während der Umschaltphase von Hand- auf Automatikbetrieb vermieden.

## Patentansprüche

1. Elektrische Regleranordnung mit

a) einem P-Reglerbaustein (PR), dessen Arbeitspunktwert ($Y_o$) einstellbar ist und an dessen Ausgang eine Stellgröße ($Y_A$) ansteht,

b) einer Handsteuereinrichtung (H), an deren Ausgang eine manuell einstellbare weitere Stellgröße ($Y_H$) ansteht und mit

c) einem Umschalter (U), mit dem

c1) wahlweise die Stellgröße ($Y_A$) (Automatikbetrieb) oder die weitere Stellgröße ($Y_H$) (Handbetrieb) auf ein Stellglied (SG) durchschaltbar ist,

dadurch gekennzeichnet, daß

d) ein Arbeitspunktwertgeber (AG) vorhanden ist,

d1) an dessen einem Eingang (10) die weitere Stellgröße ($Y_H$) und

d2) an dessen weiterem Eingang (11) die Regeldifferenz aus Sollwert (W) und Istwert (X) der Regleranordnung in verstärkter Form ($x_d'$) anliegt und der

d3) in dem Betriebszustand, in dem die weitere Stellgröße ($Y_H$) am Stellglied (SG) anliegt (Handbetrieb) und für den Fall, daß die verstärkte Regeldifferenz ($x_d'$) durch Einstellung der Stellgröße ($Y_H$) gleich Null ist, einem dem jeweiligen Wert der weiteren Stellgröße ($Y_H$) zugeordneten Arbeitspunktwert ($Y_o$) ermittelt, daß

e) an den Arbeitspunktwertgeber (AG) ein Speicher (SP) angeschlossen ist, in dem dieser Arbeitspunktwert ($Y_o$) gespeichert ist, und daß

f) der Ausgang des Speichers (SP) mit einem Arbeitspunkteingang (4) des P-Reglerbausteins (PR) verbunden ist (Figur).

2. Regleranordnung nach Anspruch 1, dadurch gekennzeichnet, daß

g) die Handsteuereinrichtung (H) und der Arbeitspunktwertgeber (AG) Digitalbausteine sind,

h) der Speicher (SP) ein Digitalspeicher ist und daß

i) der P-Reglerbaustein (PR) und das Stellglied (SG) so ausgebildet sind, daß sie zur Verarbeitung digitaler Signale geeignet sind.

3. Regleranordnung nach Anspruch 2, dadurch gekennzeichnet, daß

j) die Handsteuereinrichtung (H) und der Arbeitspunktwertgeber (AG) Bestandteile eines Mikrokomputers sind.

## Claims

1. An electrical regulating arrangement with

a) a P-regulating module (PR) whose operating point value ($Y_o$) is adjustable and at whose output a correcting value ($Y_A$) occurs,

b) a manual control device (H) at whose output a manually adjustable further correcting value ($Y_H$) occurs and with

c) a change-over switch (U) by which

c1) selectively either the correcting value ($Y_A$) (automatic operation) or the further correcting value ($Y_H$) (manual operation) can be switched through to a correcting element (SG), characterised in that

d) an operating point value generator (AG) is provided

d1) at whose first input (10) the further correcting value (Y_H) occurs and

d2) at whose further input (11) the regulating difference between the theoretical value (W) and the actual value (X) of the regulating arrangement occurs in amplified form (x_d') and which

d3) in the operating state in which the further correcting value (Y_H) occurs across the correcting element (SG) (manual operation) and in the event that the amplified regulating difference (x_d') is equal to zero as a result of the setting of the correcting value (Y_H) determines an operating point value (Y_o) which is assigned to the particular value of the further correcting value (Y_H), further characterised in that

e) the operating point value generator (AG) is connected to a store (SP) in which this operating point value (Y_o) is stored and that

f) the output of the store (SP) is connected to an operating point input (4) of the P-regulating module (PR) (drawing).

2. A regulating arrangement as claimed in claim 1, characterised in that

g) the manual control device (H) and the operating point value generator (AG) are digital modules,

h) the store (SP) is a digital store and that

i) the P-regulating module (PR) and the correcting element (SG) are designed to be such that they are suitable for the processing of digital signals.

3. A regulating arrangement as claimed in claim 2, characterised in that

j) the manual control device (H) and the operating point value generator (AG) are components of a microcomputer.

**Revendications**

1. Dispositif électrique de régulation comportant

a) un module formant régulateur à action proportionnelle (PR) dont la valeur (Y_o) du point de fonctionnement est réglable et à la sortie duquel est présente une grandeur de réglage (Y_A),

b) un dispositif de commande manuelle (H), à la sortie duquel est présente une autre grandeur de réglage (Y_H) réglable manuellement, et

c) un commutateur (U), à l'aide duquel

c1) au choix, la grandeur de réglage (Y_A) (fonctionnement automatique) ou l'autre grandeur de réglage (Y_H) (fonctionnement manuel) peut être transmise directement à un organe de réglage (SG),
caractérisé par le fait que

d) il est prévu un générateur (AG) de valeurs de points de fonctionnement,

d1) à une entrée (10) duquel est appliquée l'autre grandeur de réglage (Y_H) et

d2) à l'autre entrée (11) duquel est appliquée la différence de réglage entre la valeur de consigne (W) et la valeur réelle (X) du dispositif de régulation, sous une forme amplifiée (x_d'), et qui

d3) dans l'état de fonctionnement dans lequel l'autre grandeur de réglage (Y_H) est appliquée à l'organe de réglage (SG) (fonctionnement manuel) et dans le cas où la différence amplifiée de réglage (x_d') est annulée par réglage de la grandeur de réglage (Y_H), détermine une valeur de point de fonctionnement (Y_o) associée à la valeur respective de l'autre grandeur de réglage (Y_H) et que

e) au générateur (AG) de valeurs de points de fonctionnement est raccordée une mémoire (SP) dans laquelle cette valeur de points de fonctionnement (Y_o) est mémorisée, et que

f) la sortie de la mémoire (SP) est reliée à une entrée (4) du point de fonctionnement du module formant régulateur à action proportionnelle (PR) (figure).

2. Dispositif de régulation suivant la revendication 1, caractérisé par le fait que

g) le dispositif de commande manuelle (H) et le générateur (AG) de valeurs de points de fonctionnement sont des modules numériques,

h) que la mémoire (SP) est une mémoire numérique, et que

i) le module formant régulateur à action proportionnelle (PR) et le circuit de réglage (SG) sont conçus de telle sorte qu'ils sont appropriés pour le traitement de signaux numériques.

3. Dispositif de régulation suivant la revendication 2, caractérisé par le fait que

j) le dispositif de commande manuelle (H) et le générateur (AG) de valeurs de points de fonctionnement font partie intégrante d'un micro-ordinateur.